# EUROPEAN PATENT SPECIFICATION

(11) **EP 4 412 272 B1**
(45) Date of publication and mention of the grant of the patent: **13.08.2025**
(21) Application number: 23178167.5
(22) Date of filing: 08.06.2023
(51) Int. Cl.: H04W 12/122, B60L 58/10, H04W 52/02, H04K 3/00

(54) **METHOD AND APPARATUS FOR DEFENDING AGAINST WIRELESS ATTACK, AND BATTERY PACK INCLUDING THE APPARATUS**
VERFAHREN UND VORRICHTUNG ZUR ABWEHR VON DRAHTLOSANGRIFFEN UND BATTERIEPACK MIT DER VORRICHTUNG
PROCÉDÉ ET APPAREIL DE DÉFENSE CONTRE UNE ATTAQUE SANS FIL, ET BLOC-BATTERIE COMPRENANT L'APPAREIL

(30) Priority: 01.02.2023 KR 20230013769
(43) Date of publication of application: 07.08.2024
(73) Proprietor: Samsung SDI Co., Ltd., Yongin-si, Gyeonggi-do 17084 (KR)
(72) Inventor: Kim, Minsu, Yongin-si, Gyeonggi-do 17084 (KR)
(74) Representative: Gulde & Partner

(56) References cited:
- EP-A1- 4 093 045
- WO-A1-2021/162985
- CN-A- 112 260 719

## Description

### BACKGROUND

### (a) Field

The present invention relates to a method and apparatus for defending against wireless attack, and a battery pack including the apparatus.

### (b) Description of the Related Art

Recently, in constructing a battery pack for an electric vehicle, a wireless battery management system (BMS) technology is attracting attention.

Wireless BMS does not need communication wires for communication between modules. According to the elimination of communication wires, the volume of the battery pack can be reduced, and reliability and efficiency can be improved in theory. There is no need to redesign complex wire harnesses when developing a specific communication system or for each new vehicle.

However, there are predictable problems associated with wireless communication. That is, the wireless BMS may have potential vulnerabilities to external intentional jamming attacks, network traffic sniffing, and network traffic spoofing.

WO 2021/162985 A1 discloses methods, apparatuses, systems, devices, and non-transitory computer program products for resolving a failure in communication within a wireless battery management system (BMS) of a vehicle. CN 112260719 A relates to a frequency hopping communication method for wireless battery management, a battery management system applying the frequency hopping communication method, and a wireless battery management system. EP 4 093 045 A1 relates generally to ultra-wideband (UWB) wireless technology, and more specifically, to wireless battery management system security.

### SUMMARY

The invention is defined by the appended claims.

Embodiments provide a method and apparatus for defending against wireless attack and a battery pack including the apparatus capable of detecting coming through a wireless interface and defending against the external attack.

According to one aspect, a method for defending against wireless attack is provided. The method for defending against wireless attack includes: collecting external RF signals through at least one external antenna mounted on a battery pack; determining an attack signal from the collected external RF signals; and canceling an external RF signal corresponding to the attack signal.

The determining may include: analyzing strength of the external RF signal; and if the strength of the external RF signal is greater than or equal to a predetermined first reference value and less than a predetermined second reference value, checking whether the external RF signal is an attack signal based on a communication error diagnosis result between at least one slave battery management system (BMS) and detecting information on at least one battery module and a master BMS performing communication with the at least one slave BMS.

The determining may further include, if the strength of the external RF signal is equal to or greater than the second reference value, determining the external RF signal as the attack signal.

The checking whether the external RF signal is an attack signal may include determining the external RF signal as the attack signal if a communication error between the at least one slave BMS and the master BMS is detected.

The checking whether the external RF signal is an attack signal may include: receiving information about a strength of a normal signal transmitted and received between the at least one slave BMS and the master BMS from the master BMS; transmitting a communication diagnostic event trigger to the master BMS if the difference between the strength of the external RF signal and the strength of the normal signal is equal to or greater than a predetermined threshold; and receiving a communication error diagnosis result from the master BMS that has performed communication error diagnosis according to the communication diagnostic event trigger.

The determining may include: analyzing the strength of the external RF signal; and determining the attack signal from the external RF signal based on the strength of the external RF signal.

The canceling includes: generating a canceling RF signal having the same frequency and opposite phase as the RF signal corresponding to the attack signal; and transmitting the canceling RF signal through the external antenna.

The canceling may further include, after the transmitting, adjusting at least one of a frequency and a strength of the canceling RF signal, based on a communication error diagnosis result between at least one slave battery management system (BMS) detecting information on at least one battery module and a master BMS performing communication with the at least one slave BMS.

According to another aspect, an apparatus for defending against wireless attack is provided. The apparatus for defending against wireless attack includes: at least one external antenna that is mounted on a battery pack and receives external RF signals; a signal analyzer that analyzes the external RF signals; an attack determiner that determines an attack signal from the external RF signals using analysis information of the external RF signals; and an attack defender that cancels the external RF signal corresponding to the attack signal.

The attack determiner may determine the attack signal from the external RF signals based on the strength of the external RF signals.

The attack determiner, if the strength of the external RF signal is greater than or equal to a predetermined first reference value and less than a predetermined second reference value, may check whether the external RF signal is an attack signal, based on the strength of a normal signal transmitted and received between at least one slave battery management system (BMS) detecting information on at least one battery module and a master BMS performing communication with the at least one slave BMS and a communication error diagnosis result between the at least one slave BMS and the master BMS.

The attack determiner may determine the external RF signal as the attack signal if the strength of the external RF signal is equal to or greater than the second reference value.

The attack determiner may determine the external RF signal as the attack signal if a communication error between the at least one slave BMS and the master BMS is detected.

The apparatus for defending against wireless attack may further include an internal communicator that performs in wireless communication with the master BMS, and the attack determiner, if a difference between the strength of the external RF signal and the normal signal is greater than or equal to a predetermined threshold, may generate a communication diagnosis event trigger and transmit the communication diagnosis event trigger to the master BMS through the internal communicator, and may receive a communication error diagnosis result from the master BMS that has performed communication error diagnosis according to the communication diagnostic event trigger.

The attack defender generates a canceling RF signal having the same frequency and opposite phase as the external RF signal corresponding to the attack signal, and transmits the canceling RF signal through the external antenna.

The attack defender may adjust at least one of a frequency and a strength of the canceling RF signal, based on a communication error diagnosis result between at least one slave battery management system (BMS) detecting information on at least one battery module and a master BMS performing communication with the at least one slave BMS.

According to another aspect, a battery pack is provided. The battery pack includes: at least one battery module; at least one slave battery management system (BMS) that detects information about the at least one battery module; a master BMS that performs wireless communication with the at least one slave BMS and controls the at least one slave BMS based on information about the at least one battery module; and an apparatus for defending against wireless attack. The apparatus for defending against wireless attack may include: at least one external antenna that is mounted on a battery pack and receives external RF signals; a signal analyzer that analyzes the external RF signals; an attack determiner that determines an attack signal from the external RF signals using analysis information of the external RF signals; and an attack defender that cancels the external RF signal corresponding to the attack signal.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

FIG. 1 is a diagram illustrating a battery pack including an apparatus for defending against wireless attack according to an embodiment.
FIG. 2 is a flowchart illustrating an example of a method for defending against an external attack in the apparatus for defending against wireless attack shown in FIG. 1.
FIG. 3 is a diagram showing an example of a method for checking an attack signal in the apparatus for defending against wireless attack shown in FIG. 1.
FIG. 4 is a flowchart illustrating another example of a method for checking an attack signal in the apparatus for defending against wireless attack shown in FIG. 1.
FIG. 5 is a diagram schematically illustrating a method for diagnosing a communication error in the master BMS shown in FIG. 1.
FIG. 6 is a flowchart illustrating an example of a method for canceling an RF signal corresponding to an attack signal in the apparatus for defending against wireless attack shown in FIG. 1.
FIG. 7 is a diagram illustrating an apparatus for defending against wireless attack according to an embodiment.

### DETAILED DESCRIPTION OF THE EMBODIMENTS

Hereinafter, embodiments of the present invention will be described in detail with reference to the attached drawings so that a person of ordinary skill in the art may easily implement the present invention. As those skilled in the art would realize, the described embodiments may be modified in various different ways, all without departing from the scope of the present invention. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, when a part is referred to "include" a certain element, it means that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present invention, a first element may be referred to as a second element, and similarly, a second element may be referred to as a first element.

Furthermore, when a component is referred to be "connected" with another component, it includes not only the case where two components are "directly connected" but also the case where two components are "indirectly or non-contactedly connected" with another component interposed therebetween, or the case where two components are "electrically connected." On the other hand, when an element is referred to as "directly connected" to another element, it should be understood that no other element exists in the middle.

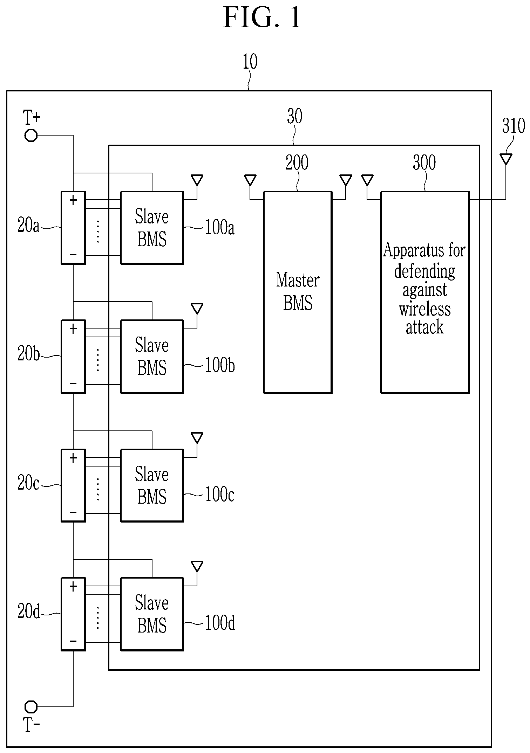

FIG. 1 is a diagram illustrating a battery pack including an apparatus for defending against wireless attack according to an embodiment.

Referring to FIG. 1, the battery pack 10 may be mounted in various power devices that use electrical energy stored in the battery pack 10, such as an electric vehicle. The battery pack 10 may include a plurality of battery modules 20a, 20b, 20c, and 20d connected in series with each other and the wireless battery management device 30.

The plurality of battery modules 20a, 20b, 20c, and 20d connected in series with each other can be connected to an external charging device or load through system terminals T+ and T-, and can be charged by the charging device or discharged by the load.

Each of the battery modules 20a, 20b, 20c, and 20d may include a plurality of battery cells electrically connected to each other in series and/or parallel.

The wireless battery management device 30 may include a plurality of slave battery management systems (BMS) 100a, 100b, 100c, and 100d and a master BMS 200. Hereinafter, for convenience of explanation, as shown in FIG. 1, it will be described that the battery pack 10 includes four battery modules 20a, 20b, 20c, and 20d, and the wireless battery management device 30 includes four slave BMS 100a, 100b, and 100c.

The plurality of slave BMSs 100a, 100b, 100c, and 100d may be installed to correspond to the plurality of battery modules 20a, 20b, 20c, and 20d included in the battery pack 10 on a one-to-one basis. Each of the plurality of slave BMSs 100a, 100b, 100c, and 100d may be electrically connected to one battery module in which it is installed among the plurality of battery modules 20a, 20b, 20c, and 20d. For example, the slave BMS 100a may be electrically connected to the battery module 20a, and the slave BMS 100b may be electrically connected to the battery module 20b. The slave BMS 100c may be electrically connected to the battery module 20c, and the slave BMS 100d may be electrically connected to the battery module 20d.

Each of the plurality of slave BMSs 100a, 100b, 100c, and 100d may detect the overall state (e.g., voltage, current, and temperature) of the battery modules 20a, 20b, 20c, and 20d electrically connected thereto, and perform various control functions (e.g., charging, discharging, balancing) for adjusting the state of the battery modules 20a, 20b, 20c, and 20d. At this time, each control function is directly performed by each slave BMS 100a, 100b, 100c, and 100d based on the state of the battery module 20a, 20b, 20c, and 20d or may be performed according to a command from the master BMS 200.

The master BMS 200 receives information on the battery modules 20a, 20b, 20c, and 20d from the plurality of slave BMSs 100a, 100b, 100c, and 100d, and may perform control functions such as state of charge (SOC), power control, cell balancing control, failure diagnosis control, cooling control, and thermal runaway detection control. In addition, the master BMS 200 may control a relay for supplying and disconnecting the power of the battery modules 20a, 20b, 20c, and 20d to and from the load based on the information of the battery modules 20a, 20b, 20c, and 20d.

The master BMS 200 may be connected to a plurality of slave BMSs 100a, 100b, 100c, and 100d using a wireless network as a connection method.

Through a wireless connection between the master BMS 200 and the plurality of slave BMSs 100a, 100b, 100c, and 100d, communication wiring complexity may be reduced, the volume of the battery pack 10 may be reduced, and cost may be reduced. However, the wireless connection may have potential vulnerabilities to wireless attacks such as external intentional jamming attacks, network traffic sniffing, and network traffic spoofing attacks.

To defend against such wireless attacks, the wireless battery management device 30 according to an embodiment may include an apparatus for defending against wireless attack 300. Alternatively, the apparatus for defending against wireless attack 300 may be implemented inside the battery pack 10 separately from the wireless battery management device 30.

The apparatus for defending against wireless attack 300 may include at least one external antenna 310.

The at least one external antenna 310 may be located on a surface of a metal layer surrounding the battery pack 10. Although one external antenna 310 is shown in FIG. 1 for convenience, two or more external antennas 310 can be located on the surface of a metal layer surrounding the battery pack 10 according to the shape of the battery pack 10 or the characteristics of the external antenna 310.

The apparatus for defending against wireless attack 300 may be connected to the master BMS 200 using a wireless network as a connection method.

The apparatus for defending against wireless attack 300 may collect RF signals received from at least one external antenna 310 and, if the collected RF signals are determined to be attack signals, may perform an operation to cancel the RF signals corresponding to the attack signals. By doing this, the apparatus for defending against wireless attack 300 may defend against external attacks.

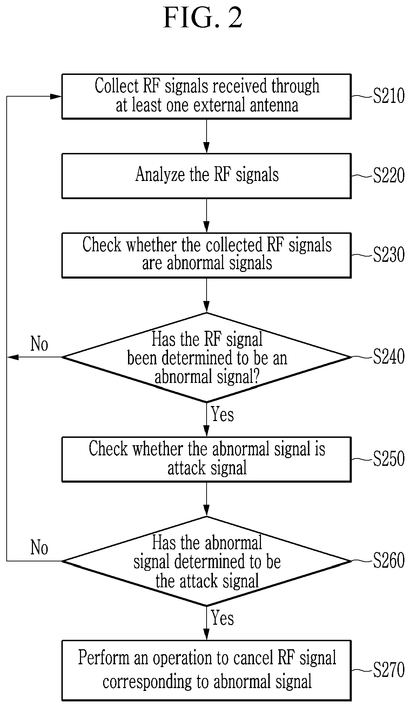

FIG. 2 is a flowchart illustrating an example of a method for defending against an external attack in the apparatus for defending against wireless attack shown in FIG. 1.

Referring to FIG. 2, the apparatus for defending against wireless attack 300 may collect RF signals received through at least one external antenna 310 (S210).

The apparatus for defending against wireless attack 300 may analyze the collected RF signals (S220).

The apparatus for defending against wireless attack 300 may check whether the collected RF signals are abnormal signals through analysis of the collected RF signal (S230). Abnormal signals may include 'disturbing or malicious attack signals'. In addition, the abnormal signals may include a signal that does not cause a communication error between the master BMS 200 and the plurality of slave BMSs 100a, 100b, 100c, and 100d, although the strength of the abnormal signals are different from that of normal signals. The normal signals are signals transmitted and received between the master BMS 200 and a plurality of slave BMSs 100a, 100b, 100c, and 100d, and may include signals including information of each battery module 20a, 20b, 20c, and 20d and/or signals including the control command of the master BMS 200. The apparatus for defending against wireless attack 300 may determine whether the collected RF signals are the abnormal signals based on the strength of the collected RF signals. The apparatus for defending against wireless attack 300 may determine that the collected RF signals are abnormal signals if the strength is equal to or greater than a predetermined first reference value.

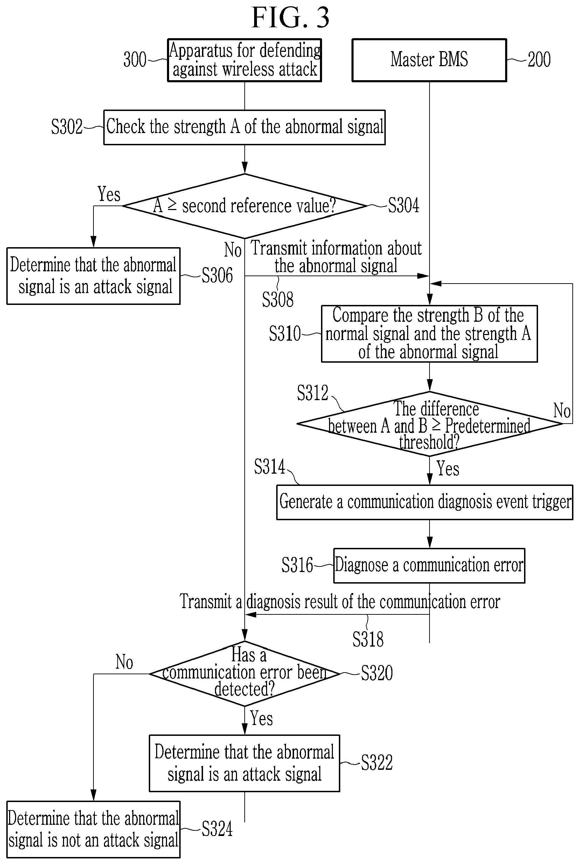

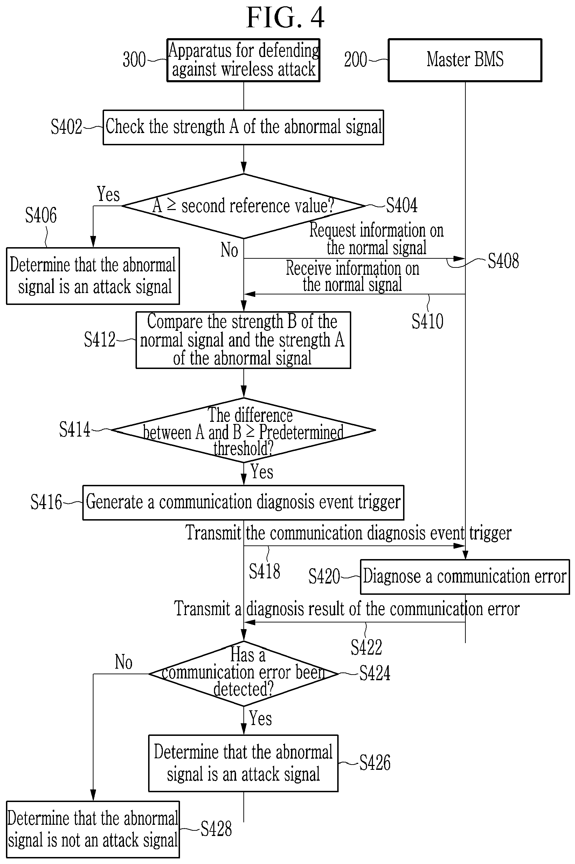

If it is determined that the collected RF signals are the abnormal signals (S240), the apparatus for defending against wireless attack 300 may check whether the abnormal signal is an attack signal (S250). As an example of a method of determining whether an abnormal signal is an attack signal, the apparatus for defending against wireless attack 300 may determine that the abnormal signal is an attack signal if the strength of the abnormal signal is equal to or greater than a predetermined second reference value. The second reference value may be set higher than the first reference value. Another example of a method of determining whether an abnormal signal is an attack signal will be described later based on FIGS. 3 and 4.

If it is determined that the abnormal signal is an attack signal (S260), the apparatus for defending against wireless attack 300 may perform an attack defense operation.

As an example of an attack defense operation, the apparatus for defending against wireless attack 300 may perform an operation to cancel an RF signal corresponding to the abnormal signal (S270). The apparatus for defending against wireless attack 300 may generate a canceling RF signal having the same frequency, the same amplitude, and an opposite phase as the RF signal corresponding to the abnormal signal, and transmit the canceling RF signals through at least one external antenna 310. The RF signals corresponding to the abnormal signals may be canceled by the canceling RF signals, and through this, disturbance or malicious attack may be prevented.

As another example of the attack defense operation, the apparatus for defending against wireless attack 300 may instruct a frequency band change to the master BMS 200 to change the communication frequency band between the master BMS 200 and the plurality of slave BMSs 100a, 100b, 100c, and 100d.

FIG. 3 is a diagram showing an example of a method for checking an attack signal in the apparatus for defending against wireless attack shown in FIG. 1.

Referring to Figure 3, the apparatus for defending against wireless attack 300 may check the strength A of the abnormal signal (S302).

If the strength A of the abnormal signal is equal to or greater than a second reference value (S304), the apparatus for defending against wireless attack 300 may determine that the abnormal signal is an attack signal (S306). The second reference value may be set to a value capable of determining an attack signal with the strength of the signal. That is, if the strength of the signal is equal to or greater than the second reference value, the corresponding signal may be determined to be an attack signal.

On the other hand, if the strength A of the abnormal signal is less than the second reference value (S304), the apparatus for defending against wireless attack 300 may perform a process of determining whether the abnormal signal is the attack signal.

If the strength A of the abnormal signals is less than the second reference value (S304), the apparatus for defending against wireless attack 300 may transmit information about the abnormal signal to the master BMS 200 (S308). The information on the abnormal signals may include, for example, the strength A of the abnormal signals.

The master BMS 200 may generate a communication diagnostic event trigger based on information on the abnormal signal. The master BMS 200 compares the strength B of the normal signal and the strength A of the abnormal signal (S310), and if the difference between the strength B of the normal signal and the strength A of the abnormal signal is greater than or equal to a predetermined threshold (S312), may generate the communication diagnosis event trigger (S314).

The master BMS 200 diagnoses a communication error with each slave BMS 100a, 100b, 100c, and 100d in response to the communication diagnosis event trigger (S316). The master BMS 200 may transmit a diagnosis result of the communication error with each slave BMS 100a, 100b, 100c, and 100d to the apparatus for defending against wireless attack 300 (S318).

If the apparatus for defending against wireless attack 300 confirms that the communication error has been detected based on the diagnosis result of the communication error (S320), it can be determined that the abnormal signal is an attack signal (S322).

If the apparatus for defending against wireless attack 300 confirms that the communication error is not detected based on the diagnosis result of the communication error (S320), it can be determined that the abnormal signal is not an attack signal (S324).

FIG. 4 is a flowchart illustrating another example of a method for checking an attack signal in the apparatus for defending against wireless attack shown in FIG. 1.

Referring to Figure 4, the apparatus for defending against wireless attack 300 may check the strength A of the abnormal signal (S402).

If the strength A of the abnormal signal is equal to or greater than the second reference value (S404), the apparatus for defending against wireless attack 300 may determine that the abnormal signal is an attack signal (S406).

On the other hand, if the strength A of the abnormal signal is less than the second reference value (S404), the apparatus for defending against wireless attack 300 may perform a process of determining whether the abnormal signal is the attack signal.

If the strength A of the abnormal signal is less than the second reference value (S404), the apparatus for defending against wireless attack 300 may request information on the normal signal from the master BMS 200 (S408).

The master BMS 200 may transmit information of the normal signal to the apparatus for defending against wireless attack 300 (S410). The information of the normal signal may include, for example, the strength B of the normal signal.

The apparatus for defending against wireless attack 300 may generate a communication diagnosis event trigger based on normal signal information. The apparatus for defending against wireless attack 300 compares the strength B of the normal signal and the strength A of the abnormal signal (S412), and if the difference between the strength B of the normal signal and the strength A of the abnormal signal is greater than or equal to a predetermined threshold (S414), may generate the communication diagnosis event trigger (S416).

The apparatus for defending against wireless attack 300 may transmit the communication diagnosis event trigger to the master BMS 200 (S418).

The master BMS 200 may diagnose a communication error with each slave BMS 100a, 100b, 100c, and 100d in response to the communication diagnosis event trigger (S420). The master BMS 200 may transmit a diagnosis result of the communication error with each slave BMS 100a, 100b, 100c, and 100d to the apparatus for defending against wireless attack 300 (S422).

If the apparatus for defending against wireless attack 300 confirms that the communication error has been detected based on the diagnosis result of the communication error (S424), it can be determined that the abnormal signal is an attack signal (S426).

If the apparatus for defending against wireless attack 300 confirms that the communication error is not detected based on the diagnosis result of the communication error (S424), it may be determined that the abnormal signal is not an attack signal (S428).

The apparatus for defending against wireless attack 300 may determine whether the collected RF signals are attack signals using various methods other than the method described above. For example, it is possible to determine whether the collected RF signals are attack signals through various methods capable of detecting an external intentional jamming attack, network traffic sniffing, network traffic spoofing attack, etc.

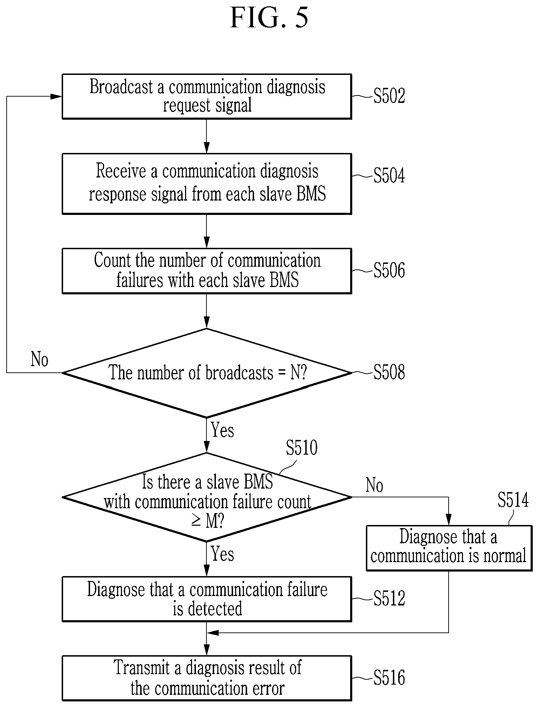

FIG. 5 is a diagram schematically illustrating a method for diagnosing a communication error in the master BMS shown in FIG. 1.

Referring to FIG. 5, the master BMS 200 may broadcast a communication diagnosis request signal to each slave BMS 100a, 100b, 100c, and 100d in order to diagnose a communication error (S502). Each slave BMS 100a, 100b, 100c, and 100d may transmit a communication diagnosis response signal to the master BMS 200 in response to the communication diagnosis request signal of the master BMS 200.

The master BMS 200 may receive a communication diagnosis response signal corresponding to the communication diagnosis request signal from each slave BMS 100a, 100b, 100c, and 100d (S504).

The master BMS 200 may count the number of communication failures with each slave BMS 100a, 100b, 100c, and 100d (S506). If the master BMS 200 does not receive the communication diagnosis response signal corresponding to the communication diagnosis response request signal from each of the slave BMSs 100a, 100b, 100c, and 100d, it is determined as a communication failure and the number of communication failures can be counted.

The master BMS 200 may broadcast a communication diagnosis request signal a predetermined number of times N for a set time, and receive a communication diagnosis response signal corresponding to the communication diagnosis request signal of the master BMS 200 from the slave BMSs 100a, 100b, 100c, and 100d.

The master BMS 200 may compare the number of broadcasts of the communication diagnosis request signal with a predetermined number of times N (S508), and repeat steps S502 to S506 until the number of broadcasts reaches a predetermined number of times N.

Next, the master BMS 200 may compare the number of communication failures with each slave BMS 100a, 100b, 100c, and 100d counted during the set time with a predetermined number of times M.

The master BMS 200 may diagnose that, among the slave BMSs 100a, 100b, 100c, and 100d, if there is a slave BMS in which the number of communication failures during the set time is greater than the predetermined number of times M (S510), a communication failure is detected (S512).

On the other hand, if the number of communication failures with the slave BMSs 100a, 100b, 100c, and 100d during the set time is less than the set number of times M, the master BMS 200 can diagnose that there is no communication error, that is, communication is normal (S514).

The master BMS 200 may transmit a diagnosis result of the communication error to the apparatus for defending against wireless attack 300 (S516).

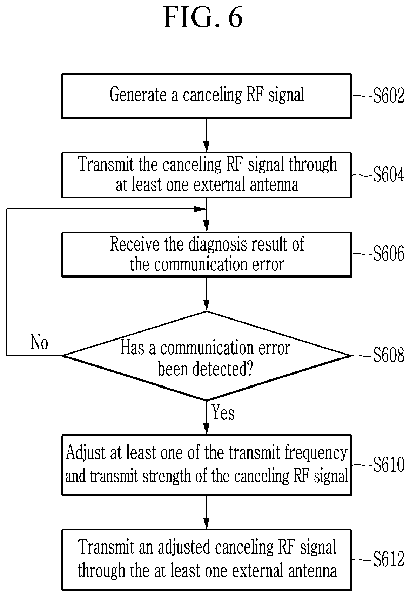

FIG. 6 is a flowchart illustrating an example of a method for canceling an RF signal corresponding to an attack signal in the apparatus for defending against wireless attack shown in FIG. 1.

Referring to FIG. 6, the apparatus for defending against wireless attack 300 may generate a canceling RF signal having the same frequency and same amplitude and opposite phase to the RF signal corresponding to the abnormal signal (S602).

The apparatus for defending against wireless attack 300 may transmit the canceling RF signal through at least one external antenna 310 (S604).

Because the canceling RF signal has the same frequency and same amplitude as the RF signal corresponding to the attack signal and has the opposite phase as the RF signal corresponding to the attack signal, the RF signal corresponding to the attack signal can be canceled by the cancellation RF signal, thereby preventing disturbance or malicious attack.

On the other hand, if the communication error is detected as a result of the communication error diagnosis by the abnormal signal, the master BMS 200 may perform the communication error diagnosis every set time interval and transmits the diagnosis result of the communication error to the apparatus for defending against wireless attack 300.

The apparatus for defending against wireless attack 300 may receive the diagnosis result of the communication error from the master BMS 200 (S606).

If the apparatus for defending against wireless attack 300 confirms that the communication error has been detected based on the diagnosis result of the communication error (S608), it may adjust at least one of the transmission frequency and transmission strength of the canceling RF signal (S610), and transmit a canceling RF signal having the adjusted transmit frequency and transmit strength through at least one external antenna 310 (S612).

The apparatus for defending against wireless attack 300 may adjust the transmission frequency and transmission strength of the offset RF signal until the communication failure is not detected as a result of the communication error diagnosis of the master BMS 200.

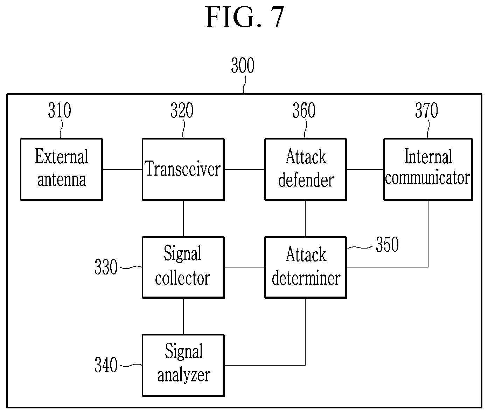

FIG. 7 is a diagram illustrating an apparatus for defending against wireless attack according to an embodiment.

Referring to FIG. 7, the apparatus for defending against wireless attack 300 may include at least one external antenna 310, a transceiver 320, a signal collector 330, a signal analyzer 340, an attack determiner 350, an attack defender 360, and an internal communicator 370.

The at least one external antenna 310 may be located on a surface of a metal layer surrounding the battery pack 10. RF signals received through at least one external antenna 310 may be transmitted to the transceiver 320.

The transceiver 320 may transmit RF signals received through at least one external antenna 310 to the signal collector 330. Also, the transceiver 320 may transmit a canceling RF signal generated by the attack defender 360 to the outside through the external antenna 310.

The signal collector 330 may collect RF signals received through at least one external antenna 310 and transfer the collected RF signals to the signal analyzer 340.

The signal analyzer 340 may analyze the collected RF signals. The signal analyzer 340 may analyze the frequency and strength of the collected RF signals. The signal analyzer 340 may transmit analysis information of the collected RF signals to the attack determiner 350.

The attack determiner 350 may determine whether the collected RF signals are abnormal signals based on analysis information of the collected RF signals. If the strength of the RF signal is greater than or equal to a predetermined first reference value, the attack determiner 350 may determine the RF signal it as an abnormal signal. If it is determined that the RF signal is an abnormal signal, the attack determiner 350 determines whether the abnormal signal is an attack signal. The attack determiner 350 may determine that the abnormal signal is an attack signal if the strength of the abnormal signal is high enough to be regarded as an attack signal. For example, if the strength of the abnormal signal is equal to or greater than the second reference value, it may be determined that the abnormal signal is an attack signal. In addition, the attack determiner 350 may determine that the abnormal signal is an attack signal based on the method described in FIG. 3 or FIG. 4.

If it is determined that the abnormal signal is an attack signal, the attack determiner 350 may transmit a defense instruction signal to the attack defender 360.

The attack defender 360 may perform an operation to cancel the RF signal corresponding to the abnormal signal in response to the defense instruction signal. The attack defender 360 may generate a canceling RF signal having the same frequency, same amplitude, and an opposite phase as the RF signal corresponding to the abnormal signal, and transmit the canceling RF signal to the transceiver 320. In addition, the attack defender 360 may adjust at least one of the transmission frequency and transmission strength of the canceling RF signal based on the result of the re-diagnosis of the communication error of the master BMS 200.

The internal communicator 370 may transmit and receive RF signals to and from the master BMS 200.

The apparatus for defending against wireless attack 300 may represent a computing device in which the method for defending against wireless attack described above is implemented. The apparatus for defending against wireless attack 300 may include at least one processor. At least one processor may be implemented in various types such as an application processor (AP), a central processing unit (CPU), a graphics processing unit (GPU), and the like. The at least one processor stores program commands for implementing at least some functions of the transceiver 320, the signal collector 330, the signal analyzer 340, the attack determiner 350, and the attack defender 360 in memory, and execute program commands stored in the memory to perform a method for defending against wireless attack.

Meanwhile, at least some functions of the apparatus for defending against wireless attack 300 may be performed in the master BMS 200. As an example, functions of the attack determiner 350 and the attack defender 360 may be implemented in the master BMS 200. As another example, functions of the signal collector 330, the signal analyzer 340, and the attack determiner 350 may be implemented in the master BMS 200. As another example, functions of the signal collector 330, the signal analyzer 340, the attack determiner 350, and the attack defender 360 may be implemented in the master BMS 200.

According to at least one of the embodiments, an external attack may be defended by detecting an external attack signal and performing an operation to cancel the external attack signal.

Furthermore, according to at least one of the embodiments, an unexpected abnormal operation of an electric vehicle may be prevented by responding to an external attack signal.

Although the embodiments have been described in detail above, the scope of the present invention is not limited thereto, and various modifications and improvements made by those skilled in the art using the basic concept of the present invention defined in the following claims are also included in the scope of the present invention.

It is clear for one of ordinary skill in the art that the disclosed embodiments can be combined where possible.

### <Description of symbols>

10: battery pack
20a, 20b, 20c, 20d: battery module
30: wireless battery management device
100a, 100b, 100c, 100d: Slave BMS
200: Master BMS
300: apparatus for defending against wireless attack
310: external antenna
320: transceiver
330: signal collector
340: signal analyzer
350: attack determiner
360: attack defender
370: internal communicator

## Claims

1. A method for defending against wireless attack, the method comprising:
collecting external RF signals through at least one external antenna (310) mounted on a battery pack (10);
determining an attack signal from the collected external RF signals; and
canceling an external RF signal corresponding to the attack signal;
wherein the canceling comprises:
generating a canceling RF signal having the same frequency and opposite phase as the RF signal corresponding to the attack signal; and
transmitting the canceling RF signal through the external antenna (310).

2. The method as claimed in claim 1, wherein
the determining comprises:
analyzing strength of the external RF signal; and
if the strength of the external RF signal is greater than or equal to a predetermined first reference value and less than a predetermined second reference value, checking whether the external RF signal is an attack signal based on a communication error diagnosis result between at least one slave battery management system, BMS, detecting information on at least one battery module (20a, 20b, 20c, 20d) and a master BMS (200) performing communication with the at least one slave BMS (100a, 100b, 100c, 100d).

3. The method as claimed in claim 2, wherein
the determining further comprises:
if the strength of the external RF signal is equal to or greater than the second reference value, determining the external RF signal as the attack signal; and/or wherein
the checking whether the external RF signal is an attack signal comprises:
determining the external RF signal as the attack signal if a communication error between the at least one slave BMS (100a, 100b, 100c, 100d) and the master BMS is detected.

4. The method as claimed in claim 2, wherein
the checking whether the external RF signal is an attack signal comprises:
receiving information about a strength of a normal signal transmitted and received between the at least one slave BMS (100a, 100b, 100c, 100d) and the master BMS (200) from the master BMS (200);
transmitting a communication diagnostic event trigger to the master BMS (200) if the difference between the strength of the external RF signal and the strength of the normal signal is equal to or greater than a predetermined threshold; and
receiving a communication error diagnosis result from the master BMS (200) that has performed communication error diagnosis according to the communication diagnostic event trigger.

5. The method as claimed in any one of the preceding claims, wherein
the determining comprises:
analyzing the strength of the external RF signal; and
determining the attack signal from the external RF signal based on the strength of the external RF signal.

6. The method as claimed in any one of the preceding claims, wherein
the canceling further comprises,
after the transmitting, adjusting at least one of a frequency and a strength of the canceling RF signal, based on a communication error diagnosis result between at least one slave battery management system, BMS, detecting information on at least one battery module (20a, 20b, 20c, 20d) and a master BMS (200) performing communication with the at least one slave BMS (100a, 100b, 100c, 100d).

7. An apparatus for defending against wireless attack (300), the apparatus comprising:
at least one external antenna (310) that is mounted on a battery pack (10) and receives external RF signals;
a signal analyzer (340) that analyzes the external RF signals;
an attack determiner (350) that determines an attack signal from the external RF signals using analysis information of the external RF signals; and
an attack defender (360) that cancels the external RF signal corresponding to the attack signal;
wherein the attack defender (360) generates a canceling RF signal having the same frequency and opposite phase as the external RF signal corresponding to the attack signal, and transmits the canceling RF signal through the external antenna (310).

8. The apparatus as claimed in claim 7, wherein
the attack determiner (350) determines the attack signal from the external RF signals based on the strength of the external RF signals.

9. The apparatus as claimed in claim 7 or 8, wherein
the attack determiner (350), if the strength of the external RF signal is greater than or equal to a predetermined first reference value and less than a predetermined second reference value, checks whether the external RF signal is an attack signal, based on the strength of a normal signal transmitted and received between at least one slave battery management system (BMS) detecting information on at least one battery module (20a, 20b, 20c, 20d) and a master BMS (200) performing communication with the at least one slave BMS (100a, 100b, 100c, 100d) and a communication error diagnosis result between the at least one slave BMS (100a, 100b, 100c, 100d) and the master BMS (200).

10. The apparatus as claimed in claim 9, wherein
the attack determiner (350) determines the external RF signal as the attack signal if the strength of the external RF signal is equal to or greater than the second reference value; and/or if a communication error between the at least one slave BMS (100a, 100b, 100c, 100d) and the master BMS (200) is detected.

11. The apparatus as claimed in any one of claims 7 to 10, further comprising:
an internal communicator (370) that performs wireless communication with the master BMS (200),
wherein the attack determiner (350), if a difference between the strength of the external RF signal and the normal signal is greater than or equal to a predetermined threshold, generates a communication diagnosis event trigger and transmits the communication diagnosis event trigger to the master BMS (200) through the internal communicator (370), and receives a communication error diagnosis result from the master BMS (200) that has performed communication error diagnosis according to the communication diagnostic event trigger.

12. The apparatus as claimed in any one of claims 7 to 11, wherein
the attack defender (360) adjusts at least one of a frequency and a strength of the canceling RF signal, based on a communication error diagnosis result between at least one slave battery management system, BMS, detecting information on at least one battery module (20a, 20b, 20c, 20d) and a master BMS (200) performing communication with the at least one slave BMS (100a, 100b, 100c, 100d).

13. A battery pack (10) comprising:
at least one battery module (20a, 20b, 20c, 20d);
at least one slave battery management system (BMS) that detects information about the at least one battery module (20a, 20b, 20c, 20d);
a master BMS (200) that performs wireless communication with the at least one slave BMS (100a, 100b, 100c, 100d) and controls the at least one slave BMS (100a, 100b, 100c, 100d) based on information about the at least one battery module (20a, 20b, 20c, 20d); and
an apparatus for defending against wireless attack (300) as claimed in any one of claims 7 to 12.

## Patentansprüche

1. Verfahren zur Abwehr von Drahtlosangriffen, das Verfahren umfassend:
Sammeln von externen HF-Signalen durch mindestens eine externe Antenne (310), die an einem Batteriepack (10) angebracht ist;
Feststellen eines Angriffssignals aus den gesammelten externen HF-Signalen; und
Auslöschen eines dem Angriffssignal entsprechenden externen HF-Signals;
wobei das Auslöschen umfasst:
Erzeugen eines auslöschenden HF-Signals mit derselben Frequenz und entgegengesetzter Phase wie das dem Angriffssignal entsprechende HF-Signal; und
Senden des auslöschenden HF-Signals über die externe Antenne (310).

2. Verfahren nach Anspruch 1, wobei
das Feststellen umfasst:
Analysieren der Stärke des externen HF-Signals; und,
wenn die Stärke des externen HF-Signals größer oder gleich einem vorbestimmten ersten Referenzwert und kleiner als ein vorbestimmter zweiter Referenzwert ist, Prüfen, ob das externe HF-Signal ein Angriffssignal ist, auf der Grundlage eines Kommunikationsfehler-Diagnoseergebnisses zwischen mindestens einem Slave-Batterieverwaltungssystem, Slave-BMS, das Informationen über mindestens ein Batteriemodul (20a, 20b, 20c, 20d) erfasst, und einem Master-BMS (200), das eine Kommunikation mit dem mindestens einen Slave-BMS (100a, 100b, 100c, 100d) durchführt.

3. Verfahren nach Anspruch 2, wobei
das Feststellen ferner umfasst:
wenn die Stärke des externen HF-Signals gleich oder größer als der zweite Referenzwert ist, Feststellen des externen HF-Signals als Angriffssignal; und/oder wobei
das Prüfen, ob das externe HF-Signal ein Angriffssignal ist, umfasst:
Feststellen des externen HF-Signals als Angriffssignal, wenn ein Kommunikationsfehler zwischen dem mindestens einen Slave-BMS (100a, 100b, 100c, 100d) und dem Master-BMS erkannt wird.

4. Verfahren nach Anspruch 2, wobei
das Prüfen, ob das externe HF-Signal ein Angriffssignal ist, umfasst:
Empfangen von Informationen über eine Stärke eines normalen Signals, das zwischen dem mindestens einen Slave-BMS (100a, 100b, 100c, 100d) und dem Master-BMS (200) gesendet und empfangen wird, von dem Master-BMS (200);
Senden eines kommunikationsdiagnostischen Ereignisauslösers an das Master-BMS (200), wenn die Differenz zwischen der Stärke des externen HF-Signals und der Stärke des normalen Signals gleich oder größer als ein vorbestimmter Schwellenwert ist; und
Empfangen eines Kommunikationsfehler-Diagnoseergebnisses von dem Master-BMS (200), das entsprechend dem kommunikationsdiagnostischen Ereignisauslöser eine Kommunikationsfehler-Diagnose durchgeführt hat.

5. Verfahren nach einem der vorhergehenden Ansprüche, wobei
das Feststellen umfasst:
Analysieren der Stärke des externen HF-Signals; und
Feststellen des Angriffssignals aus dem externen HF-Signal auf der Grundlage der Stärke des externen HF-Signals.

6. Verfahren nach einem der vorhergehenden Ansprüche, wobei
das Auslöschen ferner umfasst:
nach dem Senden, Einstellen einer Frequenz und/oder einer Stärke des auslöschenden HF-Signals, auf der Grundlage eines Kommunikationsfehler-Diagnoseergebnisses zwischen mindestens einem Slave-Batterieverwaltungssystem, Slave-BMS, das Informationen über mindestens ein Batteriemodul (20a, 20b, 20c, 20d) erfasst, und einem Master-BMS (200), das eine Kommunikation mit dem mindestens einen Slave-BMS (100a, 100b, 100c, 100d) durchführt.

7. Vorrichtung zur Abwehr von Drahtlosangriffen (300), die Vorrichtung umfassend:
mindestens eine externe Antenne (310), die an einem Batteriepack (10) angebracht ist und externe HF-Signale empfängt;
einen Signalanalysator (340), der die externen HF-Signale analysiert;
einen Angriffsfeststeller (350), der ein Angriffssignal aus den externen HF-Signalen unter Verwendung von Analyseinformationen der externen HF-Signale feststellt; und
einen Angriffsabwehrer (360), der das dem Angriffssignal entsprechende externe HF-Signal auslöscht;
wobei der Angriffsabwehrer (360) ein auslöschendes HF-Signal mit derselben Frequenz und entgegengesetzter Phase wie das dem Angriffssignal entsprechende externe HF-Signal erzeugt; und das auslöschende HF-Signal über die externe Antenne (310) sendet.

8. Vorrichtung nach Anspruch 7, wobei
der Angriffsfeststeller (350) das Angriffssignal aus den externen HF-Signalen auf der Grundlage der Stärke der externen HF-Signale feststellt.

9. Vorrichtung nach Anspruch 7 oder 8, wobei
der Angriffsfeststeller (350), wenn die Stärke des externen HF-Signals größer oder gleich einem vorbestimmten ersten Referenzwert und kleiner als ein vorbestimmter zweiter Referenzwert ist, prüft, ob das externe HF-Signal ein Angriffssignal ist, auf der Grundlage der Stärke eines normalen Signals, das zwischen mindestens einem Slave-Batterieverwaltungssystem (Slave-BMS), das Informationen über mindestens ein Batteriemodul (20a, 20b, 20c, 20d) erfasst, und einem Master-BMS (200), das eine Kommunikation mit dem mindestens einen Slave-BMS (100a, 100b, 100c, 100d) durchführt, gesendet und empfangen wird, und eines Kommunikationsfehler-Diagnoseergebnisses zwischen dem mindestens einen Slave-BMS (100a, 100b, 100c, 100d) und dem Master-BMS (200).

10. Vorrichtung nach Anspruch 9, wobei
der Angriffsfeststeller (350) das externe HF-Signal als das Angriffssignal feststellt, wenn die Stärke des externen HF-Signals gleich oder größer als der zweite Referenzwert ist; und/oder wenn ein Kommunikationsfehler zwischen dem mindestens einen Slave-BMS (100a, 100b, 100c, 100d) und dem Master-BMS erkannt wird.

11. Vorrichtung nach einem der Ansprüche 7 bis 10, ferner umfassend:
einen internen Kommunikator (370), der eine Drahtloskommunikation mit dem Master-BMS (200) durchführt,
wobei der Angriffsfeststeller (350), wenn eine Differenz zwischen der Stärke des externen HF-Signals und des normalen Signals größer oder gleich einem vorbestimmten Schwellenwert ist, einen kommunikationsdiagnostischen Ereignisauslöser erzeugt und den kommunikationsdiagnostischen Ereignisauslöser über den internen Kommunikator (370) an das Master-BMS (200) sendet und ein Kommunikationsfehler-Diagnoseergebnis von dem Master-BMS (200), das entsprechend dem kommunikationsdiagnostischen Ereignisauslöser eine Kommunikationsfehler-Diagnose durchgeführt hat, empfängt.

12. Vorrichtung nach einem der Ansprüche 7 bis 11, wobei
der Angriffsabwehrer (360) eine Frequenz und/oder eine Stärke des auslöschenden HF-Signals einstellt, auf der Grundlage eines Kommunikationsfehler-Diagnoseergebnisses zwischen mindestens einem Slave-Batterieverwaltungssystem, Slave-BMS, das Informationen über mindestens ein Batteriemodul (20a, 20b, 20c, 20d) erfasst, und einem Master-BMS (200), das eine Kommunikation mit dem mindestens einen Slave-BMS (100a, 100b, 100c, 100d) durchführt.

13. Batteriepack (10), umfassend:
mindestens ein Batteriemodul (20a, 20b, 20c, 20d);
mindestens ein Slave-Batterieverwaltungssystem (Slave-BMS), das Informationen über das mindestens eine Batteriemodul (20a, 20b, 20c, 20d) erfasst;
ein Master-BMS (200), das eine Drahtloskommunikation mit dem mindestens einen Slave-BMS (100a, 100b, 100c, 100d) durchführt und das mindestens eine Slave-BMS (100a, 100b, 100c, 100d) auf der Grundlage von Informationen über das mindestens eine Batteriemodul (20a, 20b, 20c, 20d) steuert; und
eine Vorrichtung zur Abwehr von Drahtlosangriffen (300) nach einem der Ansprüche 7 bis 12.

## Revendications

1. Procédé de défense contre une attaque sans fil, le procédé comportant :
la collecte de signaux RF externes par l'intermédiaire d'au moins une antenne externe (310) montée sur un bloc-batterie (10) ;
la détermination d'un signal d'attaque parmi les signaux RF externes collectés ; et
l'annulation d'un signal RF externe correspondant au signal d'attaque ;
dans lequel l'annulation comporte :
la génération d'un signal RF d'annulation ayant la même fréquence et la même phase opposée que le signal RF correspondant au signal d'attaque ; et
l'émission du signal RF d'annulation par l'intermédiaire de l'antenne externe (310).

2. Procédé selon la revendication 1, dans lequel
la détermination comporte :
l'analyse de l'intensité du signal RF externe ; et
si l'intensité du signal RF externe est supérieure ou égale à une première valeur de référence prédéterminée et inférieure à une deuxième valeur de référence prédéterminée, le fait de vérifier si le signal RF externe est un signal d'attaque sur la base d'un résultat de diagnostic d'erreur de communication entre au moins un système de gestion de batterie esclave, BMS, détectant des informations sur au moins un module de batterie (20a, 20b, 20c, 20d) et un BMS maître (200) réalisant une communication avec l'au moins un BMS esclave (100a, 100b, 100c, 100d).

3. Procédé selon la revendication 2, dans lequel
la détermination comporte en outre :
si l'intensité du signal RF externe est égale ou supérieure à la deuxième valeur de référence, la détermination du signal RF externe en tant que signal d'attaque ; et/ou dans lequel
le fait de vérifier si le signal RF externe est un signal d'attaque comporte :
la détermination du signal RF externe comme signal d'attaque si une erreur de communication entre l'au moins un BMS esclave (100a, 100b, 100c, 100d) et le BMS maître est détectée.

4. Procédé selon la revendication 2, dans lequel
le fait de vérifier si le signal RF externe est un signal d'attaque comporte :
la réception d'informations sur une intensité d'un signal normal émis et reçu entre l'au moins un BMS esclave (100a, 100b, 100c, 100d) et le BMS maître (200) en provenance du BMS maître (200) ;
la transmission d'un déclencheur d'événement de diagnostic de communication au BMS maître (200) si la différence entre l'intensité du signal RF externe et l'intensité du signal normal est égale ou supérieure à un seuil prédéterminé ; et
la réception d'un résultat de diagnostic d'erreur de communication en provenance du BMS maître (200) qui a réalisé un diagnostic d'erreur de communication en fonction du déclencheur d'événement de diagnostic de communication.

5. Procédé selon l'une quelconque des revendications précédentes, dans lequel la détermination comporte :
l'analyse de l'intensité du signal RF externe ; et
la détermination du signal d'attaque à partir du signal RF externe sur la base de l'intensité du signal RF externe.

6. Procédé selon l'une quelconque des revendications précédentes, dans lequel l'annulation comporte en outre,
après l'émission, le réglage d'au moins l'une parmi une fréquence et une intensité du signal RF d'annulation, sur la base d'un résultat de diagnostic d'erreur de communication entre au moins un système de gestion de batterie esclave, BMS, détectant des informations sur au moins un module de batterie (20a, 20b, 20c, 20d) et un BMS maître (200), réalisant une communication avec l'au moins un BMS esclave (100a, 100b, 100c, 100d).

7. Appareil de défense contre une attaque sans fil (300), l'appareil comportant :
au moins une antenne externe (310) qui est montée sur un bloc-batterie (10) et reçoit des signaux RF externes ;
un analyseur de signal (340) qui analyse les signaux RF externes ;
un dispositif de détermination d'attaque (350) qui détermine un signal d'attaque parmi les signaux RF externes à l'aide d'informations d'analyse des signaux RF externes ; et
un dispositif de défense contre les attaques (360) qui annule le signal RF externe correspondant au signal d'attaque ;
dans lequel le dispositif de défense contre les attaques (360) génère un signal RF d'annulation ayant la même fréquence et la même phase opposée que le signal RF externe correspondant au signal d'attaque, et émet le signal RF d'annulation par l'intermédiaire de l'antenne externe (310).

8. Appareil selon la revendication 7, dans lequel
le dispositif de détermination d'attaque (350) détermine le signal d'attaque parmi les signaux RF externes sur la base de l'intensité des signaux RF externes.

9. Appareil selon la revendication 7 ou 8, dans lequel
le dispositif de détermination d'attaque (350), si l'intensité du signal RF externe est supérieure ou égale à une première valeur de référence prédéterminée et inférieure à une deuxième valeur de référence prédéterminée, vérifie si le signal RF externe est un signal d'attaque, sur la base de l'intensité d'un signal normal émis et reçu entre au moins un système de gestion de batterie (BMS) esclave détectant des informations sur au moins un module de batterie (20a, 20b, 20c, 20d) et un BMS maître (200) réalisant une communication avec l'au moins un BMS esclave (100a, 100b, 100c, 100d) et d'un résultat de diagnostic d'erreur de communication entre l'au moins un BMS esclave (100a, 100b, 100c, 100d) et le BMS maître (200).

10. Appareil selon la revendication 9, dans lequel
le dispositif de détermination d'attaque (350) détermine le signal RF externe comme signal d'attaque si l'intensité du signal RF externe est égale ou supérieure à la deuxième valeur de référence ; et/ou si une erreur de communication entre l'au moins un BMS esclave (100a, 100b, 100c, 100d) et le BMS maître (200) est détectée.

11. Appareil selon l'une quelconque des revendications 7 à 10, comportant en outre :
un dispositif de communication interne (370) qui réalise une communication sans fil avec le BMS maître (200),
dans lequel le dispositif de détermination d'attaque (350), si une différence entre l'intensité du signal RF externe et le signal normal est supérieure ou égale à un seuil prédéterminé, génère un déclencheur d'événement de diagnostic de communication et transmet le déclencheur d'événement de diagnostic de communication au BMS maître (200) par l'intermédiaire du dispositif de communication interne (370), et reçoit un résultat de diagnostic d'erreur de communication en provenance du BMS maître (200) qui a réalisé un diagnostic d'erreur de communication en fonction du déclencheur d'événement de diagnostic de communication.

12. Appareil selon l'une quelconque des revendications 7 à 11, dans lequel
le dispositif de défense contre les attaques (360) règle au moins l'une parmi une fréquence et une intensité du signal RF d'annulation, sur la base d'un résultat de diagnostic d'erreur de communication entre au moins un système de gestion de batterie esclave, BMS, détectant des informations sur au moins un module de batterie (20a, 20b, 20c, 20d) et un BMS maître (200) réalisant une communication avec l'au moins un BMS esclave (100a, 100b, 100c, 100d).

13. Bloc-batterie (10) comportant :
au moins un module de batterie (20a, 20b, 20c, 20d) ;
au moins un système de gestion de batterie (BMS) esclave qui détecte des informations concernant l'au moins un module de batterie (20a, 20b, 20c, 20d) ;
un BMS maître (200) qui réalise une communication sans fil avec l'au moins un BMS esclave (100a, 100b, 100c, 100d) et commande l'au moins un BMS esclave (100a, 100b, 100c, 100d) sur la base d'informations concernant l'au moins un module de batterie (20a, 20b, 20c, 20d) ; et
un appareil de défense contre une attaque sans fil (300) selon l'une quelconque des 5 revendications 7 à 12.
